# FASCICULE DE BREVET EUROPEEN

(11) **EP 1 720 734 B1**
(45) Date de publication et mention de la délivrance du brevet: **05.01.2011**
(21) Numéro de dépôt: 05728078.6
(22) Date de dépôt: 14.02.2005
(51) Int. Cl.: B60R 5/04, B60R 13/01

(54) **TAPIS DE COFFRE DE VEHICULE AUTOMOBILE**
KOFFERRAUMTEPPICH FÜR EIN KRAFTFAHRZEUG
TRUNK CARPET FOR A MOTOR VEHICLE

(30) Priorité: 27.02.2004 FR 0450375
(43) Date de publication de la demande: 15.11.2006
(73) Titulaire: RENAULT S.A.S., 92100 Boulogne Billancourt (FR)
(72) Inventeur: BOUILLON, Jean Charles, 78940 La Queue lez Yvlines (FR)
(86) Numéro de dépôt international: PCT/FR2005/050091
(87) Numéro de publication internationale: WO 2005/085004

(56) Documents cités:
- EP-A- 1 048 518
- DE-A- 19 940 629
- DE-U- 7 632 526
- DE-U- 9 318 492
- US-A- 6 145 907

## Description

L'invention concerne un tapis de coffre de véhicule automobile et plus particulièrement un tapis de coffre comportant une sangle permettant la manipulation et le maintien dans une position levée du tapis.

Afin de permettre d'accéder dans de bonnes conditions, à des objets localisés sous le tapis de coffre, tels que la roue de secours, de l'outillage, etc., il est généralement utilisé des moyens permettant le maintien dans une position levée du tapis.

La publication EP-A-0 713 806 décrit une poignée qui comporte un volet pouvant être déployé afin de former un moyen d'accrochage à une tablette située au-dessus du compartiment à bagages, pour conserver le tapis en position levée.

Un tel dispositif est onéreux compte tenu de la fonction à assurer et du nombre d'utilisations d'un tel dispositif. De plus, la position levée du tapis est dépendante de la présence de la tablette en position haute, au-dessus du compartiment à bagages. Lorsque la tablette n'est pas présente dans le véhicule, par exemple pour des raisons de chargement, la fonction de maintien en position levée du tapis n'est pas utilisable.

La publication FR-A-2 819 457 décrit un tapis comportant une boucle de levage pouvant être attachée à un crochet disposé sur une poignée d'une tablette située au-dessus du compartiment à bagages.

Comme la publication précédente, l'absence de tablette rend impossible le maintien en position levée du tapis.

La publication DE-A-19940629 décrit un tapis comportant des moyens de maintien entre un dossier de siège.

Les tapis sont généralement constitués d'au moins deux couches de matériaux, une couche de moquette, destinée à recevoir le contact des bagages, et une couche, par exemple, de feutre, destinée à assurer la rigidité du tapis et la filtration acoustique. Les sangles équipant ces tapis sont généralement fixées sur la partie moquette du tapis, et plus particulièrement sur une extrémité, destinée à couvrir la limite arrière du coffre à bagages formée par la structure du véhicule, dépourvue de couche de feutre. La traction sur la sangle accélère le vieillissement du tapis en séparant la couche de moquette des couches de feutre formant le tapis.

Afin de pallier les inconvénients de l'état de la technique, l'invention a pour objet un moyen simple et peu coûteux permettant le maintien en position relevée du tapis de coffre par l'intermédiaire d'une sangle de levage comportant au moins une face pourvue d'un matériau pouvant s'accrocher au revêtement couvrant le dossier d'au moins un siège délimitant le compartiment à bagages.

L'invention a également pour objet, une fixation de la sangle de levage sur le tapis, maintenant l'ensemble des couches de matériaux formant ledit tapis.

Selon une caractéristique de l'invention, le tapis comporte au moins une sangle dont au moins une face est pourvue d'un matériau pouvant adhérer ou s'accrocher directement à la partie du dossier de siège formant une face intérieure du coffre à bagages, de manière à maintenir ledit tapis dans une position d'accessibilité à une zone située sous le tapis.

Selon une autre caractéristique de l'invention, le matériau est disposé sur une face de la sangle, qui est susceptible de se rabattre sur une partie du tapis auquel ledit matériau peut adhérer ou s'accrocher.

Selon une autre caractéristique de l'invention, la sangle forme une boucle.

Selon une autre caractéristique de l'invention, la boucle est dépourvue de matériau adhérent.

Selon une autre caractéristique de l'invention, la sangle est formée par le matériau adhérent.

Selon une autre caractéristique de l'invention, la sangle est disposée sur le tapis de manière à correspondre sensiblement, à la jonction de deux parties de dossier formant une continuité, dans la position levée dudit tapis.

Selon une autre caractéristique de l'invention, la sangle est fixée sur le tapis au moyen d'une fixation liant les différentes couches constitutives dudit tapis.

D'autres caractéristiques et avantages de l'invention apparaîtront à la lecture de la description d'exemples de réalisation d'une sangle de tapis de coffre aux dessins annexés dans lesquels :
- La figure 1 représente un tapis d'un coffre de véhicule automobile maintenu en position levée par l'intermédiaire d'une sangle selon l'invention.
- La figure 2 représente la fixation de la sangle.
- La figure 3 représente une variante de réalisation de la sangle.

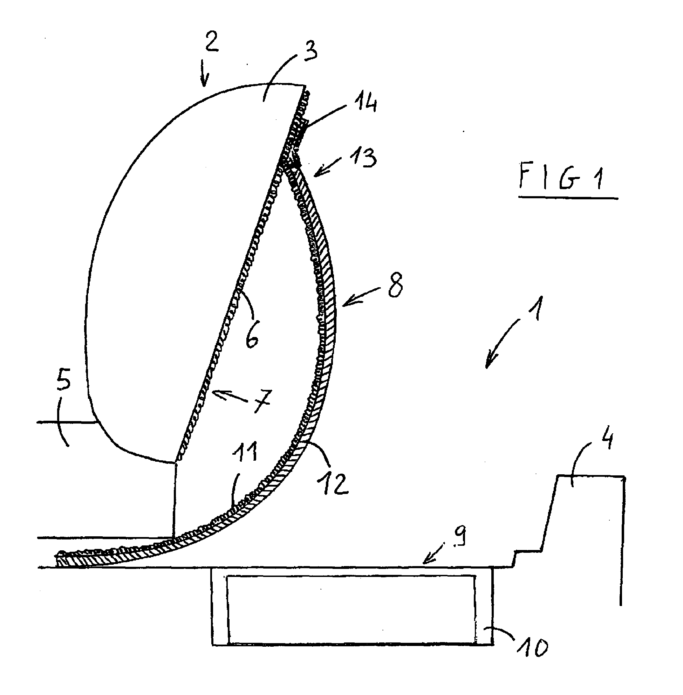

Tel que représenté à la figure 1, le coffre à bagages 1 d'un véhicule automobile est délimité dans sa partie avant par au moins un siège 2, pouvant faire partie d'une rangée de sièges ou formant une banquette dont le dossier 3 peut-être fractionnable, et dans sa partie arrière par un bord transversal 4 de la structure du véhicule. Le siège 2 comporte une assise 5 et un dossier 3, qui forme une paroi sensiblement verticale. La partie du dossier 3, disposée côté coffre à bagages 1, est couverte d'un revêtement 6, par exemple de la moquette et forme une paroi 7 du coffre à bagages 1.

Un tapis 8 recouvrant le sol 9 du coffre à bagages 1 couvre une zone de rangement 10, d'une roue de secours ou d'outils, par exemple. Le tapis 8 est constitué d'une moquette 11 recouvrant une ou plusieurs couche de feutre 12. D'autres types de matériaux ou de structures peuvent être également utilisés pour la réalisation du tapis 8. Le tapis 8 pourrait être par exemple formé par la seule moquette 11. Un bord 13 du tapis 8, qui jouxte la limite arrière 4 du coffre, comporte au moins une sangle 14 de manipulation. La sangle comporte une face 14a non adhérente au revêtement 6 du dossier 3 du siège 2, et une autre face 14b adhérente au revêtement 6 du dossier 3 du siège. La partie adhérente 14b pouvant être réalisée en un matériau, tel qu'un matériau du type VELCRO®, qui comporte des petits éléments susceptibles de s'accrocher dans les boucles de la moquette 6 formant le revêtement du dossier 3 de siège 2. Il peut être possible d'utiliser d'autres combinaisons adhérentes, comme par exemple un dossier métallique et une sangle comportant une partie aimantée. Dans ce cas les deux faces de la sangle sont susceptibles d'adhérer au dossier de siège.

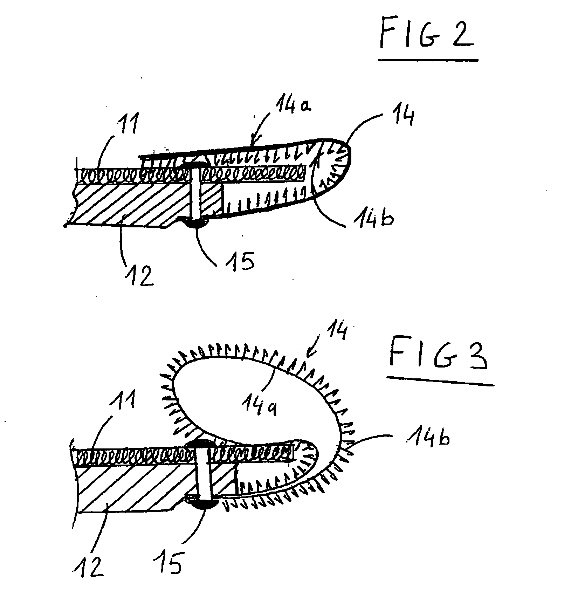

La sangle 14 est fixée au tapis 8 par l'intermédiaire d'un rivet 15, ou tout autre moyen de fixation connu en soit, permettant de supporter le poids du tapis 8 en position relevée. Tel que représenté à la figure 2, le rivet 15 maintient la sangle 14, les couches successives de feutre 12 et la moquette 11 réunis afin que lors des manipulations les différentes couches de feutre ne se séparent pas.

La sangle 14 est fixée au tapis 8 de sorte que la partie adhérente 14b soit dirigée contre le tapis 8. Telle que représentée à la figure 2, la sangle 14 est représentée en position de rangement, la partie adhérente 14b étant accrochée à la moquette 11 du tapis 8. Une telle disposition de rangement permet à la sangle 14 de ne pas adhérer à des bagages ou des objets rangés dans le coffre. De plus, cette disposition évite à la sangle 14 de s'accrocher sur d'autres tapis lors du transport desdits tapis vers l'usine d'assemblage du véhicule. L'extrémité libre de la sangle peut comporter un embout, par exemple formé par un pli de la sangle 14 (non représenté), afin d'améliorer la préhension de ladite sangle 14.

La figure 3 représente une variante de réalisation de la sangle 14, qui permet de créer une boucle fermée facilitant la préhension par l'utilisateur.

Lorsque l'utilisateur soulève le tapis 8 il saisi l'extrémité libre de la sangle 14, selon la figure 2, en effectuant une traction sur cette dernière, afin de la désolidariser de la face du tapis. Il applique la face adhésive 14b de la sangle 14 sur le dos 7 du dossier 3 de siège 2, ce qui permet de conserver le tapis 8 en position levée. Dans le cas où le dossier 3 de siège est basculé horizontalement vers l'avant, le tapis 8 sera également maintenu sur le dos 7 du dossier 3, ledit tapis 8 sera maintenu également dans une position permettant d'extraire, par exemple, la roue de secours de son logement.

Si le dossier 3 est formé de plusieurs parties indépendantes l'une de l'autre, par exemple si le dossier est fractionnable, la sangle 14 peut être localisée à proximité de la limite des parties de dossier afin de pouvoir être appliquée sur une partie de dossier restée sensiblement verticale. Lorsqu'il y a plusieurs séparations de dossier, par exemple si il y a plusieurs sièges, il peut être utilisée plusieurs sangles.

## Revendications

1. Agencement d'un tapis (8) dans un coffre de véhicule automobile dans lequel un siège (2) comporte un dossier (3) délimitant au moins en partie ledit coffre, **caractérisé en ce que** le tapis (8), qui comporte une sangle (14), est mobile entre une position de repos et une positon relevée, dans laquelle il est maintenu au moyen de la sangle (14) dont au moins une face (14b) est pourvue d'un matériau pouvant adhérer ou s'accrocher directement à une partie (6) du dossier (3) de siège (2) formant une paroi intérieure (7) du coffre, de manière que la zone de rangement située sous le tapis soit accessible.

2. Agencement d'un tapis (8) selon la revendication 1, **caractérisé en ce que**, lorsque le tapis est en position de repos, la face (14b) de la sangle (14) portant le matériau adhérent est en regard du tapis de manière à pouvoir y adhérer.

3. Agencement d'un tapis (8) de coffre selon l'une quelconque des revendications précédentes,**caractérisé en ce que** la sangle (14) forme une boucle.

4. Agencement d'un tapis (8) de coffre selon la revendication 3, **caractérisé en ce que** l'intérieur de la boucle est dépourvu de matériau adhérent.

5. Agencement d'un tapis (8) de coffre selon l'une quelconque des revendications précédentes, **caractérisé en ce que** la sangle (14) est formée par le matériau adhérent.

6. Agencement d'un tapis (8) de coffre selon l'une quelconque des revendications précédentes, **caractérisé en ce que**, lorsque le dossier (3) est formé d'au moins deux parties, la sangle (14) est disposée sur le tapis (8) de manière que, dans la position relevée dudit tapis (8), la sangle (14) correspondre sensiblement à la jonction des deux parties de dossier (3).

7. Agencement d'un tapis (8) de coffre selon l'une quelconque des revendications précédentes, **caractérisé en ce que** la sangle (14) est fixée sur le tapis (8) au moyen d'une fixation (15) liant les différentes couches constitutives du tapis (8).

## Claims

1. Device for a carpet (8) in a motor vehicle boot in which a seat (2) has a backrest (3) which at least partly defines said boot, **characterized in that** the carpet (8), which comprises a strap (14), is movable between a rest position and a raised position, in which latter it is held by means of the strap (14), at least one face (14b) of which is provided with a material capable of being fastened or attached directly to a part (6) of the seat (2) backrest (3) forming an inner wall (7) of the boot, in such a way that the storage area beneath the carpet is accessible.

2. Device for a carpet (8) according to Claim 1, **characterized in that** when the carpet is in the rest position, the face (14b) of the strap (14) on which the fastening material is located is towards the carpet so as to be able to be fastened to it.

3. Device for a carpet (8) for a boot according to any one of the preceding claims, **characterized in that** the strap (14) forms a loop.

4. Device for a carpet (8) for a boot according to Claim 3, **characterized in that** there is no fastening material on the inside of the loop.

5. Device for a carpet (8) for a boot according to any one of the preceding claims, **characterized in that** the strap (14) is formed by the fastening material.

6. Device for a carpet (8) for a boot according to any one of the preceding claims, **characterized in that**, if the backrest (3) is made up of at least two parts, the strap (14) is arranged on the carpet (8) in such a way that, when said carpet (8) is in the raised position, the strap (14) corresponds approximately to the junction between the two parts of the backrest (3).

7. Device for a carpet (8) for a boot according to any one of the preceding claims, **characterized in that** the strap (14) is fixed to the carpet (8) by means of a fixing (15) that connects the different component layers of the carpet (8).

## Patentansprüche

1. Anordnung eines Teppichs (8) in einem Kraftfahrzeugkofferraum, wobei ein Sitz (2) eine Rückenlehne (3) aufweist, die den Kofferraum zumindest zum Teil begrenzt, **dadurch gekennzeichnet, dass** der Teppich (8), der einen Gurt (14) aufweist, zwischen einer Ruhestellung und einer angehobenen Stellung beweglich ist, in der er mittels des Gurts (14) gehalten wird, von dem mindestens eine Seite (14b) mit einem Material versehen ist, das direkt an einem Teil (6) der Rückenlehne (3) des Sitzes (2) haften oder sich festhaken kann, der eine Innenwand (7) des Kofferraums bildet, damit der unter dem Teppich befindliche Staubereich zugänglich ist.

2. Anordnung eines Teppichs (8) nach Anspruch 1, **dadurch gekennzeichnet, dass**, wenn der Teppich in der Ruhestellung ist, die Seite (14b) des Gurts (14), die das haftende Material trägt, dem Teppich gegenüberliegt, um an ihm haften zu können.

3. Anordnung eines Kofferraumteppichs (8) nach einem der vorhergehenden Ansprüche, **dadurch gekennzeichnet, dass** der Gurt (14) eine Schlaufe bildet.

4. Anordnung eines Kofferraumteppichs (8) nach Anspruch 3, **dadurch gekennzeichnet, dass** das Innere der Schlaufe kein haftendes Material aufweist.

5. Anordnung eines Kofferraumteppichs (8) nach einem der vorhergehenden Ansprüche, **dadurch gekennzeichnet, dass** der Gurt (14) aus dem haftenden Material geformt ist.

6. Anordnung eines Kofferraumteppichs (8) nach einem der vorhergehenden Ansprüche, **dadurch gekennzeichnet, dass,** wenn die Rückenlehne (3) aus mindestens zwei Teilen geformt ist, der Gurt (14) so auf dem Teppich (8) angeordnet ist, dass der Gurt (14) in der angehobenen Stellung des Teppichs (8) im Wesentlichen der Verbindung der zwei Rückenlehnenteile (3) entspricht.

7. Anordnung eines Kofferraumteppichs (8) nach einem der vorhergehenden Ansprüche, **dadurch gekennzeichnet, dass** der Gurt (14) am Teppich (8) mittels einer Befestigung (15) befestigt ist, die die verschiedenen den Teppich (8) bildende Schichten verbindet.
